# EUROPÄISCHE PATENTSCHRIFT

(11) **EP 0 540 882 B1**
(45) Veröffentlichungstag und Bekanntmachung des Hinweises auf die Patenterteilung: **25.01.1995**
(21) Anmeldenummer: 92116868.8
(22) Anmeldetag: 02.10.1992
(51) Int. Cl.: A01D 41/14

(54) **Selbstfahrender Mähdrescher mit klappbarem Schneidwerk**
Self-propelled combine harvester with hinged mowing table
Moisonneuse-batteuse automotrice avec table de coupe repliable

(30) Priorität: 06.11.1991 DE 4136468
(43) Veröffentlichungstag der Anmeldung: 12.05.1993
(73) Patentinhaber: Claas OHG beschränkt haftende offene Handelsgesellschaft, D-33426 Harsewinkel (DE)
(72) Erfinder: Ristic, Stevan, W-4804 Versmold (DE); Eis, Günter, W-4834 Harsewinkel (DE); Ostrup, Heinrich, W-4834 Harsewinkel (DE)

(56) Entgegenhaltungen:
- EP-A- 0 326 836
- DE-A- 3 830 908

## Beschreibung

Die Erfindung betrifft einen selbstfahrenden Mähdrescher mit an seinem zugehörigen Schrägfördererkanal angehängtem zweiteiligen Schneidwerk, dessen beide Hälften in horizontaler Ebene über einen auf beide Schneidwerkshälften einwirkenden Antrieb schwenkbar und symetrisch ausgebildet sind, wobei das Schneidwerk aus einer geteilten Schneidwerksmulde, einem geteilten Mähbalken, einer geteilten Einzugswalze sowie einer geteilten Haspel besteht und wobei die Schneidwerkshälften zum einen über mindestens je einen schwenkbaren Träger unter Zwischenschaltung eines Rahmens mit dem Schrägfördererkanal und zum anderen über mindestens eine gemeinsame vertikal verlaufende Gelenkachse ständig miteinander verbunden sind mit Mitteln zur gradlinigen Führung dieser Achse in Maschinenlängsrichtung.

Ein derartiger Mähdrescher ist beispielsweise bekannt aus der DE-A- 38 30 908 Bei dem aus dieser Schrift bekannten Mähdrescher erfolgt das Verschwenken der beiden Schneidwerkshälften nach einer ersten Ausführungsform über zwei Kolbenzylindereinheiten, die an je einer Schneidwerkshälfte angreifen und in einer zweiten Ausführungsform aus einem im Bereich der Gelenkachse mit einer Schneidwerkshälfte fest verschweißtem Kettenrad, welches über eine Kette mit einem zweiten Kettenrad in Verbindung steht, das von einem Motor angetrieben werden kann. Dabei ist der Motor über einen Halter fest mit der anderen. Schneidwerkshälfte verbunden. Der Nachteil beider Ausführungsformen besteht darin, daß beide Antriebe sehr stark ausgebildet sein müssen, um das heim Schwenken der Schneidwerkshälften von der Arbeitsstellung in die Transportstellung auftretende Moment zu überwinden, welches insbesondere aufgrund der geometrischen Verhältnisse überdimensional stark ansteigt, und zwar kurz bevor beide Schneidwerkshälften ihre Endlage für die Transportstellung erreicht haben. Die Gestaltung derartiger Antrieb sind demzufolge konstruktiv aufwendig und sehr kostenintensiv. Der Erfindung liegt daher das Problem zugrunde, einen Mähdrescher, der eingangs näher bezeichneten Art so auszubilden, daß das Schwenken der beiden Schneidwerkshälften mit relativ einfachen und kostengünstigen Antriebsmitteln erreicht werden kann. Dies wird erfindungsgemäß dadurch erreicht, daß dem ersten auf beide Schneidwerkshälften einwirkende Schwenkantrieb ein zweiter Antrieb zugeordnet ist, wobei der zweite Antrieb lediglich beim Verschwenken der Schneidwerkshälften aus der Arbeitsstellung heraus in die Transportstellung wirksam wird. Auf diese weise wird erreicht, daß die Schneidwerkshälften zunächst einmal von nur einem einzigen Antrieb soweit aus der Arbeitsstellung in die Transportstellung verschwenkt werden können, bis das aufzubringende Drehmoment stark anwächst. In diesem Moment greift der zweite Antrieb ein, der den ersten Antrieb unterstützt. Selbstverständlich ist es auch möglich, daß die beiden Antriebe in Folge hintereinander geschaltet werden, wobei durch den ersten Antrieb die Schwenkbewegung eingeleitet und durch den zweiten Antrieb die Schwenkbewegung beendet wird. Zweckmäßigerweise wird dabei der zweite Antrieb eingeschaltet, kurz bevor die beiden Schneidwerkshälften ihre Endlage für den Transport erreicht haben. Weitere vorteilhafte Ausführungsformen sind in den Unteransprüchen näher definiert. Im Folgenden soll die Erfindung anhand eines Ausführungsbeispiels und mehrerer dieses schematisch darstellender Figuren näher erläutert werden. Dabei zeigt:
- Fig. 1: in perspektivischer Darstellung eine klappbare Schneidwerksmulde, während eines Klappvorganges
- Fig. 2: das klappbare Schneidwerk in Arbeitsstellung, in verriegeltem Zustand als Draufsicht
- Fig. 3: zwei in Transportstellung zusammengeklappte Schneidwerkshälften in der Draufsicht
- Fig. 4: eine Schnittedarstellung gemäß der Linie IV-IV aus Fig. 3
- Fig. 5: den in Fig. 4 mit gestrichelten Linien eingekreisten Teil in vergrößerter Darstellung,
- Fig. 6: eine Schnittdarstellung gemäß der Linie VI-VI aus Fig. 5
- Fig. 7: insbesondere eine Einrichtung zum Gleichlauf der beiden Schneidwerkshälften für den Schwenkvorgang sowie die zusätzlichen Abstützpunkte im Bereich der Mähbalken in der Transportstellung als Draufsicht.
In den Zeichnungen ist die Fahrrichtung der Erntemaschine mit Pfeil FR angegeben.

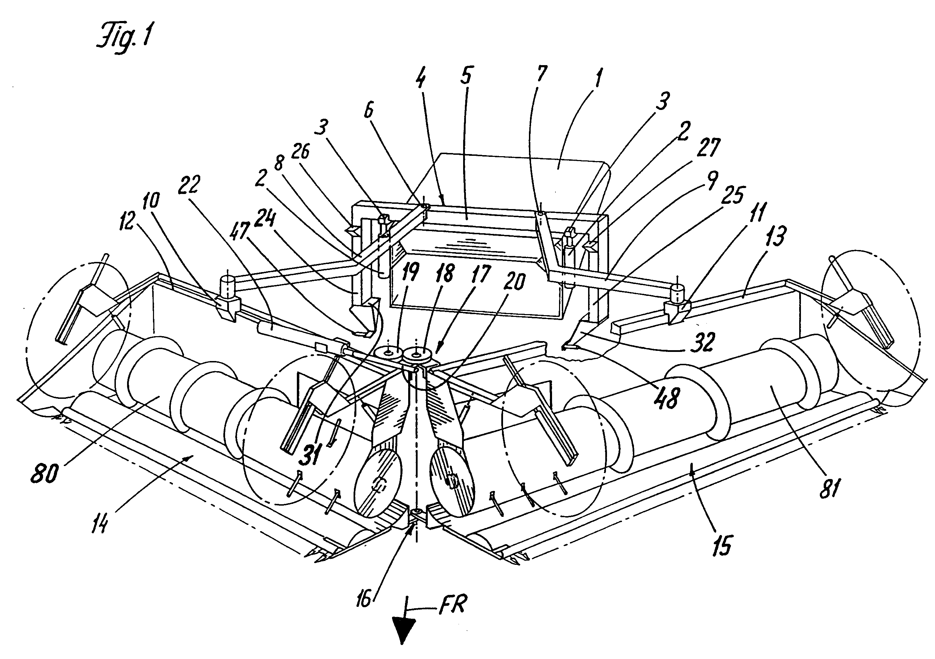

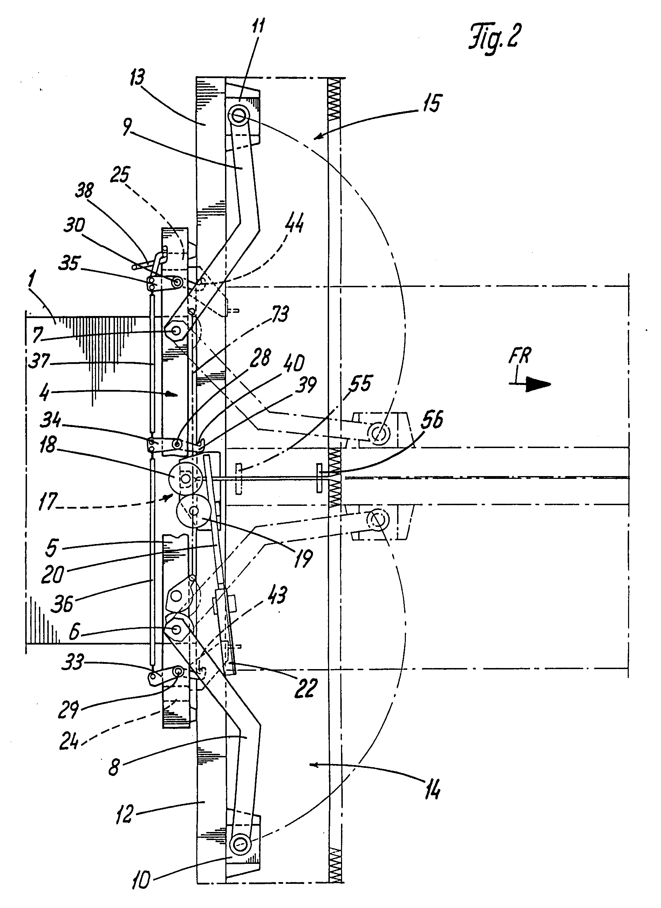

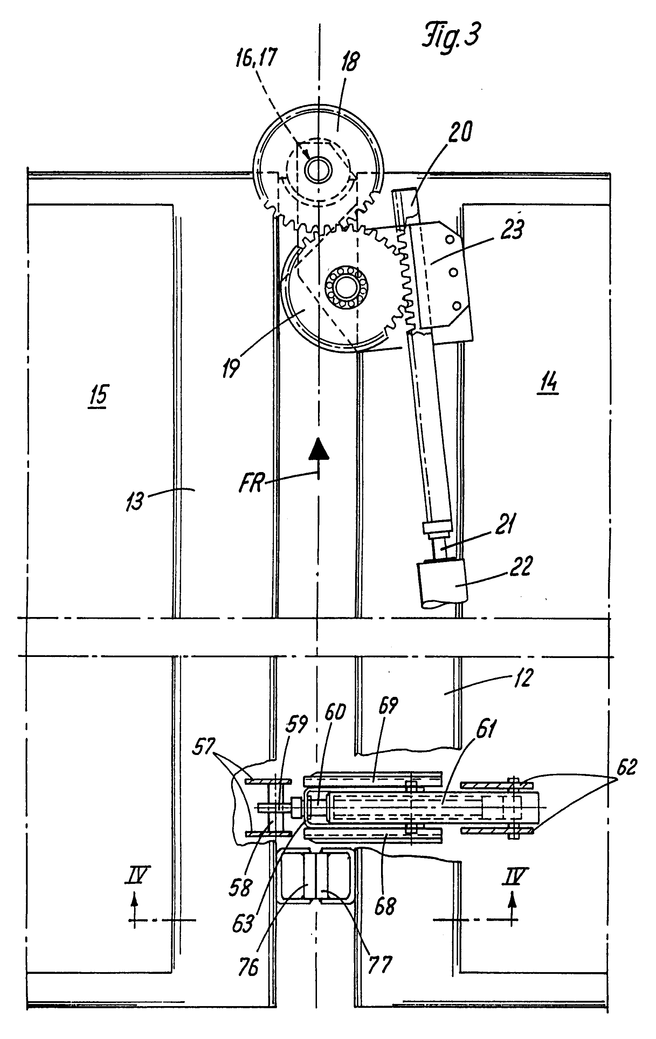

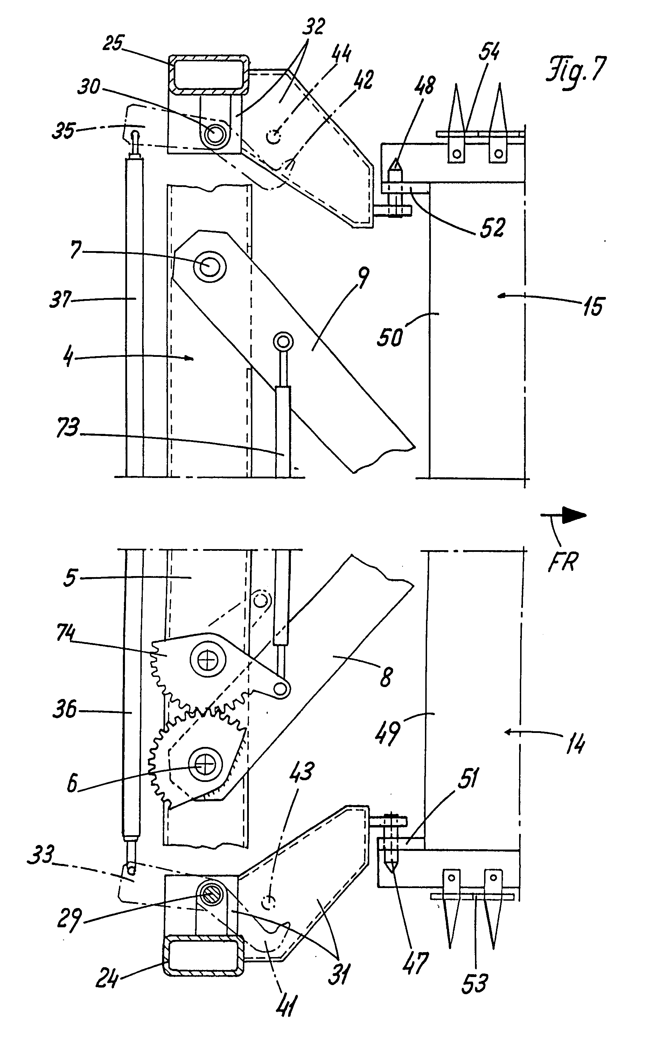

Mit 1 ist der Schrägförderkanal eines nicht dargestellten selbstfahrenden Mähdreschers bezeichnet, der an seinem vorderen Ende zwei Kolbenzylindereinheiten 2 aufweist. An den Enden der Kolbenstangen dieser Kolbenzylindereinheiten 2 sind Tragstücke 3 befestigt, auf denen ein U-förmiger Rahmen 4 aufliegt. Mit dem oberen waagerecht verlaufenden Rahmenträger 5 sind zwei Bolzen 6 und 7 fest verbunden, auf die je ein Tragarm 8 und 9 aufgesetzt ist. Mit diesen Tragarmen 8 und 9 sind an ihren den Bolzen 6 und 7 abgewandten Enden Schwenkkonsolen 10 und 11 befestigt, welche an die oberen Querrahmenteile 12 und 13 angreifen und diese tragen, wobei je ein Rahmen der Rahmen einer Schneidwerksmuldenhälfte 14, 15 ist. Die beiden Schneidwerkshälften 14 und 15 sind über eine untere und eine obere Gelenkstelle 16 und 17 miteinander verbunden, wobei koaxial zu den Gelenkstellen ein Zahnrad 18 fest mit dem Rahmen 13 verschweißt ist. In dieses Zahnrad 18 greift ein frei drehbarer an dem Rahmen 12 gelagertes Zahnrad 19 ein, welches über eine Zahnstange 20 angetrieben werden kann. Die Zahnstange 20 bildet dabei die Verlängerung einer Kolbenstange 21, deren Zylinder 22 an dem Rahmen 12 befestigt ist. Aus der Fig. 3 ist dabei zu erkennen, daß sich die Kolbenstange 20 an ihrer dem Zahnrad 19 abgewandten Seite in einem Gegenlager 23 abstützt. Aus Fig. 1 ist noch zu erkennen, daß im oberen Bereich der beiden seitlich nach unten ragenden Freischenkel 24 und 25 des Rahmens 4 Auflagen 26 und 27 angeordnet sind, an denen sich die Rahmen 12, 13 der beiden Schneidwerksmuldenhälften 14 und 15 abstützen, wenn die beiden Schneidwerkshälften, die mit vollen Linien in Fig. 2 dargestellte Arbeitsstellung eingenommen haben. In dieser Stellung werden die beiden Schneidwerkshälften mit dem Rahmen 4 verriegelt. Zu diesem Zweck weist der Rahmenträger 5 einen nach oben ragenden Zapfen 28 sowie zwei Wellen 29 und 30 auf (Fig.2). Letztere ragen zum einen, wie der Zapfen 28 nach oben vor und sind mit ihren unteren Enden in Platten 31 und 32 gelagert, die mit den unteren Enden der freien Schekel 24 und 25 verschweißt sind. Oberhalb des Rahmenträgers 5 sind mit dem Zapfen 28 und den Wellen 29 und 30 Hebel 33, 34 und 35 fest verbunden, die über ein Gestänge 36 und 37 miteinander verbunden sind und über einen Hebel 38 verdreht werben können. Der mittlere Hebel 34 ist verlängert und bildet an seinem dem Gestänge 36, 37 gegenüberliegenden Ende einen Fanghaken 39. Dieser hintergreift einen Bolzen 40, der mit dem Querrahmenteil 13 fest verbunden ist. Weiterhin sind zum Zwecke der Verriegelung der Schneidwerkshälften 14 und 15 in Arbeitsstellung mit den Wellen 29 und 30 im Bereich der Platten 31 und 32 Fanghaken 41 und 42 fest verbunden (Fig. 7), die sich in Verriegelstellung hinter nicht näher dargestellte Zapfen 43 und 44 legen, die am rückwärtigen Rahmen der Muldenhälften 14 und 15 gehalten sind. In Fig. 7 ist im Gegensatz zu Fig. 2 die stellung dargestellt, in der sich die Schneidwerkshälften 14 und 15 in Transportstellung befinden. In dieser in Fig. 7 dargestellten Lage werden die Schneidwerkshälften 14 und 15 über je einen mit den Platten 31 und 32 verbundenen Riegelbolzen 47 und 48 gesichert, welche durch an den Mähseitenwänden 49 und 50 angebrachte Lochplatten 51 und 52 ragen. Diese Verriegelung findet im unteren Bereich in Höhe der Messerbalken 53 und 54 statt. In der Arbeits-, wie auch in der Transportstellung sind die beiden Mähtischhälften 14 und 15 zusätzlich noch quer zur Fahrtrichtung FR der Erntemaschine verriegelt.

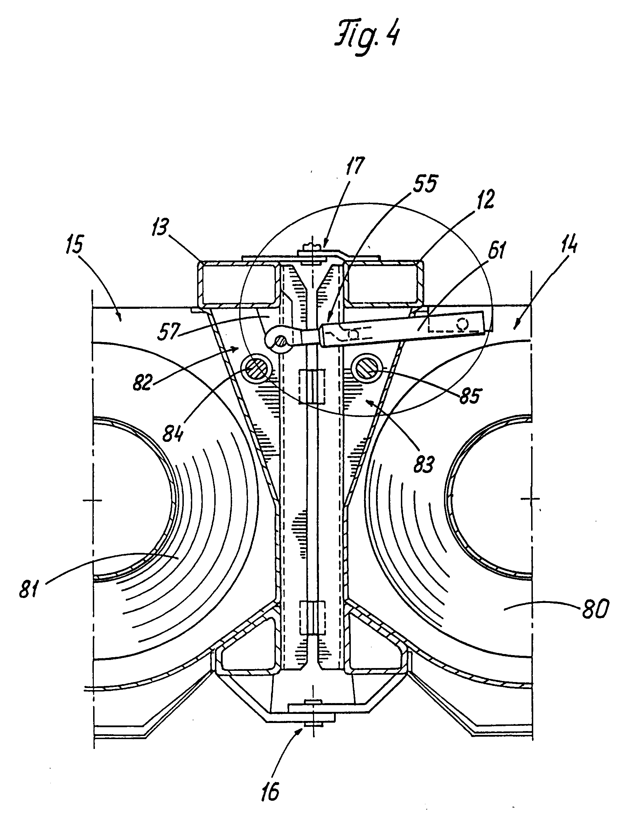

Diese Veriegelungen sind als Ganzes in der Zeichnungsfigur 2 in den Positionen 55 und 56 dargestellt, wobei die Verriegelung des Position 55 für die Transport- und die Verriegelung 56 für die Arbeitsstellung wirksam wird. Die dafür wesentlichen Elemente sin in ihrer Form und Funktion identisch, so daß lediglich an dieser Stelle nachstehend die Erläuterung der Verriegelungseinrichtung 55 für die Transportstellung erfolgt. Sie besteht aus einer mit dem Querrahmen 13 der Schneidwerkshälfte 15 verbundenen Konsole 57, die einen Bolzen 58 aufnimmt. Dieser Bolzen 58 wird hinterfaßt von einem Haken 59, der Endteil einer Kolbenstange 60 ist. (Fig. 3 - 5)
Die Kolbenstange 60 ist in einem Zylinder 61 geführt, welcher einseitig verschwenkbar in einem Halter 62 gelagert ist, wobei Letzterer mit dem Querrahmen 12 verbunden ist. Wie insbesondere aus den Fig. 3 und 6 zu erkennen ist, ist mit der Kolbenstange 60 ein U-Profil 63 ververbunden, dessen freie Schenkel 64 und 65 sich entlang des Zylinders 61 erstrecken und Laufrollen 66 und 67 tragen. Diese Rollen laufen in Führungen 68 und 69, welche über einen Träger 70 mit dem Rahmen 12 fest verbunden sind.

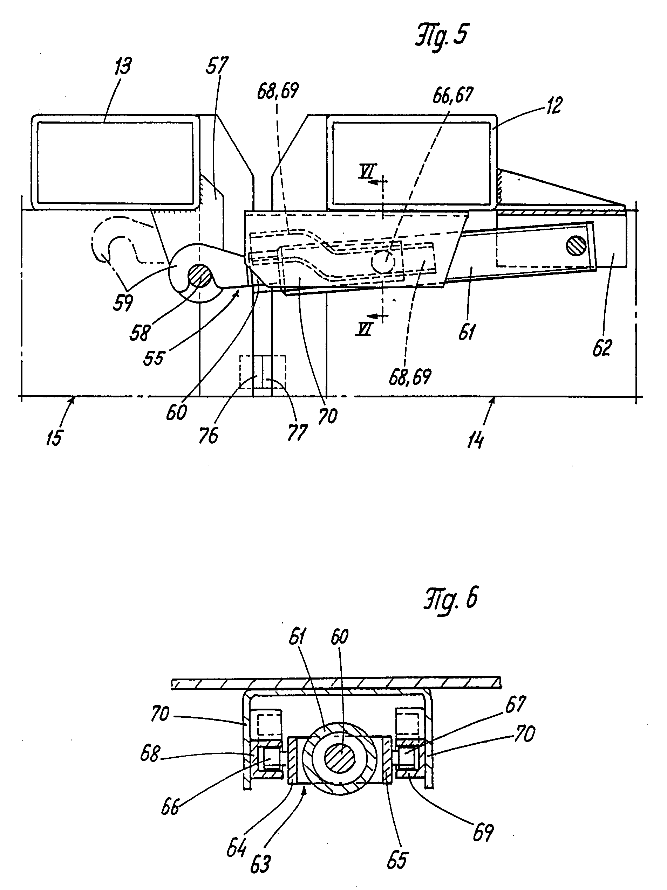

Sollen nun die beiden Schneidwerkshälften 14 und 15 aus der in Fig. 2 mit vollen Linien dargestellten Arbeitsstellung in die mit gestrichelten Linien dargestellte Transportstellung verschwenkt werden, wird zunächst einmal der Hebel 38 im Uhrzeigersinn von Hand verschwenkt, so daß der Bolzen 40 und die oberen und unteren Zapfen 43, 44 freigegeben sind. Eine weitere in Fig. 2 nur angedeutete Verriegelung 56, die ähnlich aufgebaut sein kann, wie die Verriegelung 55, wird ebenfalls gelöst. Danach fährt die Kolbenstange 21 ein, wodurch sich das Rad 19 dreht und an dem Rad 18 abwälzt. Hierdurch bewegen sich die beiden Gelenkstellen 16 und 17 in Fahrtrichtung nach vorn.
Um dabei ein gleichmäßiges Verschwenken beider Schneidwerkshälften 14 und 15 zu gewährleisten, sind gemäß Fig. 7 zwei ineinandergreifende Zahnsegmente 71 und 72 vorgesehen, die beide, wie die Tragarme 8 und 9 mit dem Rahmenträger 5 drehbar verbunden sind. Über die Koppelstange 73 steht dabei das Segment 74 mit dem Tragarm 9 Verbindung, wobei das Segment 75 mit dem Tragarm 8 fest verbunden ist. In Fig. 5 ist mit gestrichelten Linien die Lage des Hakens 59 angedeutet, die er während des Großteils der Verschwenkung der beiden Hälften 14 und 15 in Transportstellung einnimmt. Da aber das von den Rädern 18 und 19 aufzubringende Moment sehr stark zunimmt, fährt zur Entlastung dieses Antriebes die Kolbenstange 60 mit dem daran befestigten Haken 59 zu dem Zeitpunkt ein, in dem sich der Bolzen 58 unterhalb des mit gestrichelten Linien dargestellten Haken 59 befindet. Aufgrund der Ausbildung der Führungen 68 und 69 (Fig.5, 6) legt sich der Haken 59 hinter den Bolzen 58 und zieht diesen so lange an, bis sich die beiden Hälften 14 und 15 mit ihren Anschlägen 76 und 77 gegeneinander legen. Während dieser Bewegung kann der zuerst erfolgte Antrieb 20, 21, 22 abgeschaltet sein. In dieser dann erreichten Transportstellungstellung bleiben die beiden Schneidwerkshälften 14 und 15 gegeneinander durch den Bolzen 58 und dem Haken 59 einerseits und durch die Riegelbolzen 47 und 48 (Fig. 7) andererseits verriegelt.

Zu erwähnen wäre noch, daß die hinteren Wände 78 und 79 der Schneidwerkshälften 14 und 15 in Richtung der Einzugsschnecken 80 und 81 zumindest bereichsweise herausgezogen sind, so daß hinter ihnen ein Freiraum 82 bzw. 83 entsteht, durch den erforderliche Antriebsleitungen 84 und 85 hindurchgeführt werden können.

Das vorstehend näher beschriebene Ausführungsbeispiel ist ein bevorzugtes Ausführungsbeispiel und stellt in seiner Gesamtheit wesentliche Ausführungsformen der Erfindung dar.

### Bezugszeichenübersicht

- 1: Schrägförderkanal
- 2: Kolben-Zylindereinheiten
- 3: Tragstück
- 4: U-förmiger Rahmen
- 5: Rahmenträger
- 6: Bolzen
- 7: Bolzen
- 8: Tragarm
- 9: Tragarm
- 10: Schwenkkonsolen
- 11: Schwenkkonsolen
- 12: Querrahmenleiste
- 13: Querrahmenleiste
- 14: Schneidwerksmuldenhälfte
- 15: Schneidwerksmuldenhälfte
- 16: Gelenkstelle
- 17: Gelenkstelle
- 18: Zahnrad
- 19: Zahnrad
- 20: Zahnstange
- 21: Kolbenstange
- 22: Zylinder
- 23: Gegenlager
- 24: Freischenkel
- 25: Freischenkel
- 26: Auflagen
- 27: Auflagen
- 28: Zapfen
- 29: Wellen
- 30: Wellwn
- 31: Platten
- 32: Platten
- 33: Hebel
- 34: Hebel
- 35: Hebel
- 36: Gestänge
- 37: Gestänge
- 38: Hebel
- 39: Fanghaken
- 40: Bolzen
- 41: Fanghaken
- 42: Fanghaken
- 43: Zapfen
- 44: Zapfen
- 47: Riegelbolzen
- 48: Riegelbolzen
- 49: Mähtischseitenwände
- 50: Mähtischseitenwände
- 51: Lochplatten
- 52: Lochplatten
- 53: Messerbalken
- 54: Messerbalken
- 55: Querverrigelung (oben)
- 56: Querverriegelung (unten)
- 57: Konsole
- 58: Bolzen
- 59: Haken
- 60: Kolbenstange
- 61: Zylinder
- 62: Halter
- 63: U-Profil
- 64: Freie Schenkel
- 65: Freie Schenkel
- 66: Laufrollen
- 67: Laufrollen
- 68: Führungen
- 69: Führungen
- 70: Träger
- 71: Zahnsegmente
- 72: Zahnsegmente
- 73: Koppelstange
- 74: Segment
- 75: Segment
- 76: Anschläge
- 77: Anschläge
- 78: Hintere Wände
- 79: Hintere Wände
- 80: Einzugsschnecke
- 81: Einzugsschnecke
- 82: Freiraum
- 83: Freiraum
- 84: Antriebsleitungen
- 85: Antriebsleitungen

## Patentansprüche

1. Selbstfahrender Mähdrescher mit an seinem zugehörigen Schrägfördererkanal angehängtem zweiteiligen Schneidwerk, dessen beide Hälften in horizontaler Ebene über einen auf beide Schneidwerkshälften einwirkenden Antrieb schwenkbar und symetrisch ausgebildet sind, wobei das Schneidwerk aus einer geteilten Schneidwerksmulde, einem geteilten Mähbalken, einer geteilten Einzugswalze sowie einer geteilten Haspel besteht, und wobei die beiden Schneidwerkshälften zum einen über mindestens je einen schwenkbaren Träger unter Zwischenschaltung eines Rahmens mit dem Schrägfördererkanal und zum anderen über mindestens eine gemeinsame vertikalverlaufende Gelenkachse ständig miteinander verbunden sind mit Mitteln zur geradlinigen Führung dieser Achse in Maschinenlängsrichtung,
**dadurch gekennzeichnet**,
daß dem ersten auf beide Schneidwerkshälften (14,15) einwirkenden Schwenkantrieb (20, 21, 22) ein zweiter Antrieb (55, 59, 60, 61) zugeordnet ist.

2. Selbstfahrender Mähdrescher nach Anspruch 1
**dadurch gekennzeichnet**,
daß der zweite Antrieb lediglich beim Verschwenken der Schneidwerkshälften 14, 15 aus der Arbeitsstellung heraus in die Transportstellung wirksam wird.

3. Selbstfahrender Mähdrescher nach den Ansprüchen 1 und 2,
**dadurch gekennzeichnet**,
daß die beiden Antriebe in Folge hintereinander einschaltbar sind.

4. Selbstfahrender Mähdrescher nach den Ansprüchen 1 bis 3,
**dadurch gekennzeichnet**,
daß der zweite Antrieb erst eingeschaltet wird, kurz bevor die beiden Schneidwerkshälften ihre Endlage für den Transport erreicht haben.

5. Selbstfahrender Mähdrescher nach den Ansprüchen 1 bis 4,
**dadurch gekennzeichnet**,
daß der zweite Antrieb aus einem an einer Schneidwerkshälfte (14) hin- und herbewegbaren Schubelement (60) besteht, an dessen freiem Ende ein Greifer (59) befestigt ist, zum Ergreifen eines mit der anderen Schneidwerkshälfte (15) verbundenen Halters (58).

6. Selbstfahrender Mähdrescher nach den Ansprüchen 1 bis 5,
**dadurch gekennzeichnet**,
daß das Schubelement der Kolben (60) eine Kolbenzylindereinheit ist, an dessen freiem Ende ein Haken (59) angeordnet ist, und daß der Halter ein in einer Konsole (57) gelagerter Bolzen (58) ist.

7. Selbstfahrender Mähdrescher nach den Ansprüchen 1 bis 6,
**dadurch gekennzeichnet**,
daß mit der Kolbenstange (60) über ein U-Profil (63) Laufrollen (66, 67) verbunden sind, die in Führungen (68, 69) laufen.

8. Selbstfahrender Mähdrescher nach den Ansprüchen 1 bis 7,
**dadurch gekennzeichnet**,
daß die Führungen (68, 69) die Rollen (66, 67) und damit den Haken (59) während der Ausfahrbewegung der Kolbenstange (60) anheben.

9. Selbstfahrender Mähdrescher nach Ansprüchen 1 bis 8,
**dadurch gekennzeichnet**,
daß die Führungen (68 und 69) an einem Träger (70) befestigt sind, welcher mit dem Rahmen (12) fest verbunden ist.

10. Selbstfahrender Mähdrescher nach den Ansprüchen 1 bis 9,
**dadurch gekennzeichnet**,
daß der erste Antrieb aus zwei ineinandergreifende Zahnräder (18 und 19) besteht, von denen das Zahnrad (18) fest mit dem Querrahmen (13) koaxial zu der Gelenkstelle (16, 17) und das andere (19) drehbar mit dem Querrahmen (12) verbunden ist und daß das Zahnrad (19) mit einer von der Kolbenzylindereinheit (21, 22) bewegbaren Zahnstange (20) kämmt, die im Bereich des Zahnrades (19) durch ein Gegenlager (23) abgestützt ist.

11. Selbstfahrender Mähdrescher nach den Ansprüchen 1 bis 10,
**dadurch gekennzeichnet**,
daß zwecks störungsfreier Unterbringung von Energiezuführleitungen zu den beiden Antrieben und zur Unterbringung von querverlaufenden Drehwellen Freiräume (82 und 83) im oberen Bereich beider Schneidwerkshälften (14, 15) vorgesehen sind, die im wesentlichen durch Verlagerung der Wände (78 und 79) in Richtung der Einzugsschnecken (80 und 81) gebildet sind.

12. Selbstfahrender Mähdrescher nach den Ansprüchen 1 bis 11,
**dadurch gekennzeichnet**,
daß die beiden Schneidwerkshälften (14 und 15) neben der Verriegelung in Transportstellung über den Bolzen (58) und den Haken (59) zusätzlich über Lochplatten (51, 52) und in diese eingreifende Riegelbolzen (47 und 48)in Bodennähe gesichert sind, wobei Letztere fest mit den frei auslaufenden Schenkeln (24 und 25) des Rahmens (4) verbunden sind.

## Claims

1. A self-propelled combine harvester comprising a two-part cutting mechanism which is suspended at its associated inclined conveyor passage and the two halves of which are pivotable in a horizontal plane by way of a drive acting on both cutting mechanism halves and are of a symmetrical configuration, wherein the cutting mechanism comprises a divided cutting mechanism tray, a divided mowing bar, a divided intake feed roller and a divided drum, and wherein the two cutting mechanism halves on the one hand are connected to the inclined conveyor passage by way of at least one respective pivotable carrier and with the interposition of a frame and on the other hand are constantly connected to each other by way of at least one common vertically extending pivot axis with means for rectilinearly guiding said axis in the longitudinal direction of the machine, characterised in that associated with the first pivot drive (20, 21, 22) which acts on both cutting mechanism halves (14, 15) is a second drive (55, 59, 60, 61).

2. A self-propelled combine harvester according to claim 1 characterised in that the second drive becomes operative only upon pivotal movement of the cutting mechanism halves (14, 15) out of the working position into the transportation position.

3. A self-propelled combine harvester according to claims 1 and 2 characterised in that the two drives can be switched on in succession.

4. A self-propelled combine harvester according to claims 1 to 3 characterised in that the second drive is switched on first just before the two cutting mechanism halves have reached their limit position for transportation.

5. A self-propelled combine harvester according to claims 1 to 4 characterised in that the second drive comprises a thrust element (60) which is reciprocatable on a cutting mechanism half (14) and to the free end of which is fixed a gripper (59) for gripping a holder (58) connected to the other cutting mechanism half (15).

6. A self-propelled combine harvester according to claims 1 to 5 characterised in that the thrust element is the piston (60) of a piston-cylinder unit, at the free end of which is arranged a hook (59), and that the holder is a pin (58) which is mounted in a bracket (57).

7. A self-propelled combine harvester according to claims 1 to 6 characterised in that rollers (66, 67) which run in guides (68, 69) are connected to the piston rod (60) by way of a U-shaped member (63).

8. A self-propelled combine harvester according to claims 1 to 7 characterised in that the guides (68, 69) lift the rollers (66, 67) and therewith the hook (59) during the extension movement of the piston rod (60).

9. A self-propelled combine harvester according to claims 1 to 8 characterised in that the guides (68 and 69) are fixed to a carrier (70) which is fixedly connected to the frame (12).

10. A self-propelled combine harvester according to claims 1 to 9 characterised in that the first drive comprises two gears (18 and 19) which engage one into the other and of which the gear (18) is fixedly connected to the transverse frame (13) coaxially with respect to the pivot point (16, 17) and the other gear (19) is rotatably connected to the transverse frame (12) and that the gear (19) meshes with a rack (20) which is movable by the piston-cylinder unit (21, 22) and which is supported in the region of the gear (19) by a support means (23).

11. A self-propelled combine harvester according to claims 1 to 10 characterised in that free spaces (82 and 83) are provided in the upper region of both cutting mechanism halves (14, 15) for the purposes of trouble-free arrangement of power feed lines to the two drives and for arranging transversely extending rotary shafts, the free spaces being substantially formed by displacement of the walls (78 and 79) in the direction of the intake feed screws (80 and 81).

12. A self-propelled combine harvester according to claims 1 to 11 characterised in that the two cutting mechanism halves (14 and 15), besides being locked in the transportation position by the pin (58) and the hook (59), are additionally secured in the vicinity of the ground by way of apertured plates (51, 52) and lock bolts (47 and 48) engaging into same, the lock bolts being fixedly connected to the freely terminating legs (24 and 25) of the frame (4).

## Revendications

1. Moissonneuse-batteuse automotrice dont le canal de transport incliné auxiliaire présente un dispositif de coupe suspendu et composé de deux parties, ces deux parties étant configurées symétriquement et de manière a pouvoir pivoter dans un plan horizontal au moyen d'une commande activant les deux parties du dispositif de coupe, ce dispositif de coupe étant composé d'une auge en deux parties, d'une barre de coupe en deux parties, d'un rouleau d'alimentation en deux parties ainsi que d'une rabatteuse en deux parties, les deux parties du dispositif de coupe étant d'une part reliées au canal de transport incliné, via au moins un support oscillant, par insertion d'un châssis et étant d'autre part reliées en permanence entre elles via au moins un essieu articulé commun dirigé dans le sens vertical, ce grâce à un entraînement rectiligne de cet axe dans le sens longitudinal de la machine, caractérisée en ce que une deuxième commande (55,59,60,61) est adjointe à la première commande de pivotement (20,21,22) agissant sur les deux parties du dispositif de coupe (14,15).

2. Moissonneuse-batteuse automotrice selon la revendication 1, caractérisée en ce que la deuxième commande n'entre en action que lors du pivotement des deux parties du dispositif de coupe (14,15) de la position de fonctionnement à la position de transport.

3. Moissonneuse-batteuse automotrice selon l'une ou l'autre des revendications 1 et 2, caractérisée en ce que les deux commandes peuvent être connectées l'une à la suite de l'autre.

4. Moissonneuse-batteuse automotrice selon l'une ou l'autre des revendications 1 à 3, caractérisée en ce que la deuxième commande n'est connectée que peu de temps avant que les deux parties du dispositif de coupe n'aient atteint leur position de fin de course pour le transport.

5. Moissonneuse-batteuse automotrice selon l'une ou l'autre des revendications 1 à 4, caractérisée en ce que la deuxième commande se compose d'un élément de poussée (60) pouvant se déplacer dans les deux sens sur une partie du dispositif de coupe (14), élément de poussée à l'extrémité libre duquel est fixée une griffe (59) destinée à saisir un support (58) relié à l'autre partie du dispositif de coupe (15).

6. Moissonneuse-batteuse automotrice selon l'une ou l'autre des revendications 1 à 5, caractérisée en ce que l'élément de poussée des pistons (60) est une unité de cylindre à piston à l'extrémité libre de laquelle est disposé un crochet (59) et en ce que le support est une cheville (58) disposée dans une console (57).

7. Moissonneuse-batteuse automotrice selon l'une ou l'autre des revendications 1 à 6, caractérisée en ce que des galets de roulement (66,67) sont reliés à la tige de piston (60) via un profil en forme de U (63), ces galets de roulement passant dans les éléments de guidage (68,69).

8. Moissonneuse-batteuse automotrice selon l'une ou l'autre des revendications 1 à 7, caractérisée en ce que les éléments de guidage (68,69) soulèvent les galets (66,67) et par conséquent le crochet (59) pendant le mouvement de sortie de la tige de piston (60).

9. Moissonneuse-batteuse automotrice selon l'une ou l'autre des revendications 1 à 8, caractérisée en ce que les éléments de guidage (68,69) sont fixés sur un support, (70) lequel est relié fixement au châssis (12).

10. Moissonneuse-batteuse automotrice selon l'une ou l'autre des revendications 1 à 9, caractérisée en ce que la première commande se compose de deux engrenages (18 et 19) s'engrenant l'un dans l'autre, dont l'un (18) est relié fixement au cadre transversal (13) coaxialement à la position articulée (16,17) et dont l'autre (19) est relié en rotation avec la châssis transversal (12) et en ce que l'engrenage (19) s'engrène avec une crémaillère (20) pouvant être déplacée par le vérin (21,22), cette crémaillère étant soutenue par une butée (23) dans la zone de l'engrenage (19).

11. Moissonneuse-batteuse automotrice selon l'une ou l'autre des revendications 1 à 11, caractérisée en ce que pour la mise en place sans problèmes de conduites d'alimentation en énergie vers les deux commandes et pour la mise en place d'arbres rotatifs disposés dans le sens transversal, sont prévus des espaces libres (82 et 83) dans la zone supérieure des deux parties du dispositif de coupe (14,15), ces espaces libres étant créés en raison du décalage des parois (78 et 79) dans le sens des vis sans fin d'amenée (80 et 81).

12. Moissonneuse-batteuse automotrice selon l'une ou l'autre des revendications 1 à 11, caractérisée en ce que les deux parties du dispositif de coupe (14 et 15) sont fixées, outre par le verrouillage en position de transport au moyen de la cheville (58) et du crochet (59), par des plaques perforées (51,52) et des boulons d'assemblage (47 et 48) s'insérant dans celles-ci, l'ensemble étant disposé à côté du sol, les boulons d'assemblage étant reliés fixement avec les montants (24 et 25) sortant librement du châssis (4).
